# EUROPÄISCHE PATENTSCHRIFT

(11) **EP 1 076 807 B1**
(45) Veröffentlichungstag und Bekanntmachung des Hinweises auf die Patenterteilung: **09.01.2002**
(21) Anmeldenummer: 99920807.7
(22) Anmeldetag: 28.04.1999
(51) Int. Cl.: G01C 9/20

(54) **OPTISCHER NEIGUNGSMESSER**
OPTICAL CLINOMETER
CLINOMETRE OPTIQUE

(30) Priorität: 04.05.1998 DE 19819610
(43) Veröffentlichungstag der Anmeldung: 21.02.2001
(73) Patentinhaber: ZSP Geodätische Systeme GmbH, 07745 Jena (DE)
(72) Erfinder: MONZ, Ludwin-Heinz, D-89081 Ulm (DE); GLIMM, Andreas, D-99425 Weimar (DE)
(74) Vertreter: Niestroy, Manfred
(86) Internationale Anmeldenummer: EP9902868
(87) Internationale Veröffentlichungsnummer: WO9957513

(56) Entgegenhaltungen:
- CH-A- 673 707
- DE-A- 19 610 941

## Beschreibung

Die Erfindung bezieht sich auf einen optischen Neigungsmesser gemäß dem Oberbegriff des ersten Patentanspruchs zur Messung der Neigung von Geräten, Maschinen und Werkstücken. Er ist insbesondere für die Anwendung in oder an geodätischen Geräten bestimmt.

Neben Neigungsmessern mit Pendeln und Libellen sind Geräte bekannt, die ein oder mehrere Flüssigkeitsgefäße umfassen, in denen sich eine Flüssigkeit und ein Gas oder mindestens zwei nicht mischbare Flüssigkeiten mit unterschiedlichen optischen oder elektrischen Eigenschaften befinden.

Aus den Druckschriften DE 41 10 858 und US 5 392 112 sind Neigungsmesser mit einem neigungsempfindlichen und strahlenablenkenden Sensor beschrieben, durch den eine geometrische Figur, eine optische Struktur oder ein Lichtpunkt oder -fleck auf ein Lineararray von CCD-Elementen abgebildet wird. Die Abbildung der Figur oder Struktur erfolgt durch Einkoppelelemente hindurch und durch Abbildungsoptiken entweder durch den Flüssigkeitshorizont (Grenzfläche Flüssigkeit/Gas oder Flüssigkeit/Flüssigkeit) hindurch oder nach Reflexion am Flüssigkeitshorizont auf das Lineararray. Bei einer Neigung des Gerätes erfolgt eine Richtungsänderung des Beleuchtungsstrahlenbündels aus einer Normallage entweder durch Brechung am relativ zum Strahlenverlauf geneigten Flüssigkeitshorizont, wobei die Flüssigkeit sich wie ein optischer Keil verhält, oder durch veränderte Reflexionsbedingungen am Flüssigkeitshorizont, in dem sich der Einfallswinkel des Beleuchtungsstrahlenbündels und der Reflexionswinkel des am Flüssigkeitshorizont reflektierten Strahlenbündels ändern. Aus der veränderten Position der auf dem Lineararray abgebildeten Figur wird die Neigung in zwei Koordinatenrichtungen ermittelt.

Aus der US 5 392 112 ist es ferner bekannt, zur Ermittlung der Neigungswinkel in zwei Dimensionen einen flächenhaften CCD-Sensor einzusetzen.

Diese bekannten Neigungsmesser nutzen als Sensoren zur Bestimmung der Lage des Lichtschwerpunktes positionsempfindliche Flächen- oder Streifensensoren oder zur Auswertung einer Helligkeitsstruktur CCD-Zeilensensoren. Um eine hohe Auflösung zu erzielen, sind aufgrund der eingeschränkten Linearität der Differenz- und Streifensensoren sowie des beschränkten erzielbaren Informationsgehaltes auf linearen Zeilensensoren (Begrenzung der minimalen Strukturbreite durch Abbildungsfehler, Bildfeldgröße und Pixellänge) längere Brennweiten des optischen Systems und damit größere Ausmaße der Meßeinrichtung sowie ein eingeschränkter oder eingeschränkt hochauflösender Meßbereich erforderlich. Besonders stark wirkt dieser Effekt bei Neigungsmessern nach dem Prinzip der Lichtbrechung beim Durchtritt der Gas-Flüssigkeits-Grenzschicht, da die Ablenkung des Lichtstrahls bei Neigungsänderung nur einen Bruchteil der Ablenkung bei Reflexion ausmacht.

Ein zweiachsiger Neigungsmesser mit einem Gehäuse, in welchem sich eine Flüssigkeit mit freier Oberfläche befindet, und mit einer projizierten, an der Flüssigkeitsoberfläche reflektierten und durch abbildende Elemente auf eine Empfängeranordnung abgebildeten Struktur ist aus der DE 196 10 941 bekannt.

Diese Neigungsmesser besitzen ein Gefäß aus Glas oder einem anderen lichtdurchlässigen Werkstoff, wobei der Boden des Gefäßes u. a. eine planparallele Platte darstellt, an welcher Ein- und Auskoppelelemente und kollimierende und abbildende optische Elemente angeordnet sind. Die kollimierenden und abbildenden Elemente befinden sich in einem bestimmten Abstand von den jeweiligen Koppelelementen, welche als Prismen ausgebildet sind. Alle diese optischen Glieder sind aufgrund ihrer Herstellungstechnologie recht aufwendig. Ihre Größe ist entscheidend für die Größe des Neigungsmessers.

Der Erfindung liegt die Aufgabe zugrunde, einen optischen Neigungsmesser zu schaffen, der konstruktiv einfach, platzsparend und robust aufgebaut ist, eine hohe mechanische Stabilität besitzt und weitgehend temperaturunabhängig eine hochgenaue Neigungsmessung ermöglicht und kostengünstig herstellbar ist.

Erfindungsgemäß wird diese Aufgabe bei einem optischen Neigungsmesser gemäß dem Oberbegriff des ersten Anspruches mit den Mittel des kennzeichnenden Teils dieses Anspruchs gelöst. In den weiteren Ansprüchen sind weitere Ausgestaltungen und Einzelheiten des erfindungsgemäßen Neigungsmessers beschrieben.

So ist es im Sinne einer sehr einfachen Herstellung und einer raumsparenden Ausführung besonders vorteilhaft, wenn das abbildende Element die Form einer einzigen dicken plankonvexen Linse besitzt, wobei deren ebene Fläche der Flüssigkeit zugewandt ist. Dabei kann das optische Element ein Segment mit einer sphärischen Oberfläche, beispielsweise mit einer Halbkugelfläche sein, welches an der Unterseite des Gehäuses oder Gefäßes angeordnet ist oder auch Bestandteil des Gehäuses ist. Gemäß einer weiteren Ausführung der Erfindung stellt das optische Element eine Kugelschicht mit einer optisch wirksamen sphärischen Fläche dar, durch welche die Ein- und Auskopplung des Strahlenganges in die Flüssigkeit hinein und aus ihr heraus erfolgt.

Vorteilhaft ist ferner; wenn das optische Element Bestandteil des Bodens des Gehäuses oder Gefäßes ist, dessen Form spangebend oder spanlos hergestellt ist. Eine solche Ausführung ist besonders günstig herstellbar und außerdem sehr robust. Weiterhin ist es möglich, das optische Element auf der Unterseite des Bodens, der das Gehäuse lichtquellenseitig abschließt, aufzukitten oder aufzukleben, Auch kann dieses optische Element in einer Ausnehmung oder Bohrung des Bodens eingeklebt oder eingekittet sein. Diese Verbindung muß flüssigkeitsdicht erfolgen. Bei dieser Anordnung grenzt die ebene Fläche des optischen Elementes direkt an die Flüssigkeit.

Das optische Element selbst muß aus einem für Licht durchlässigen Werkstoff, beispielsweise aus einem optischen Kunststoff oder aus Glas, hergestellt sein.

Eine andere Ausführungsform der Erfindung ergibt sich, wenn das Gehäuse und das abbildende optische Element ein einziges Bauteil bilden

Eine weitere Ausführungsform der Erfindung ergibt sich, wenn das Gehäuse und das abbildende optische Element ein einziges Bauteil darstellen und das optische Element durch eine kalottenförmige Ausbuchtung des Bodens des Gehäuses gebildet wird, deren Volumen Bestandteil des Volumens des Gehäuses ist und mit derselben Flüssigkeit gefüllt ist wie der übrige Teil des Gehäuses oder Gefäßes.

Um eine Neigungsmessung in mehreren Koordinaten, z. B. in den beiden Koordinaten der Ebene, durchführen zu können, ohne den Neigungsmesser um seine Achse drehen zu müssen, werden vorteilhaft mindestens zwei gegeneinander winkelversetzt angeordnete Lichtquellen und zugeordnete Sensoranordnungen vorgesehen. Damit ist es möglich, rasch und zuverlässig die Neigung einer Ebene zu bestimmen.

Die Erfindung soll nachstehend an Ausführungsbeispielen näher erläutert werden. In der Zeichnung zeigen
- Fig. 1: schematisch einen Neigungsmesser mit einem im Gefäßboden eingesetzten optischen Element,
- Fig. 2: einen Neigungsmesser mit aufgekittetem oder aufgeklebtem optischen Element,
- Fig.3: ein Neigungsmesser mit einem mit einer kalottenförmigen Ausbuchtung versehenen Gefäßboden,
- Fig. 4: einen Neigungsmesser mit einem halbkugelförmigen Gefäßboden,
- Fig. 5: einen Neigungsmesser mit einem als Kugelschicht ausgebildeten optischen Element und
- Fig. 6: eine Ansicht von unten auf den Neigungsmesser mit zwei um 90° versetzten Lichtquellen und Sensoranordnungen.

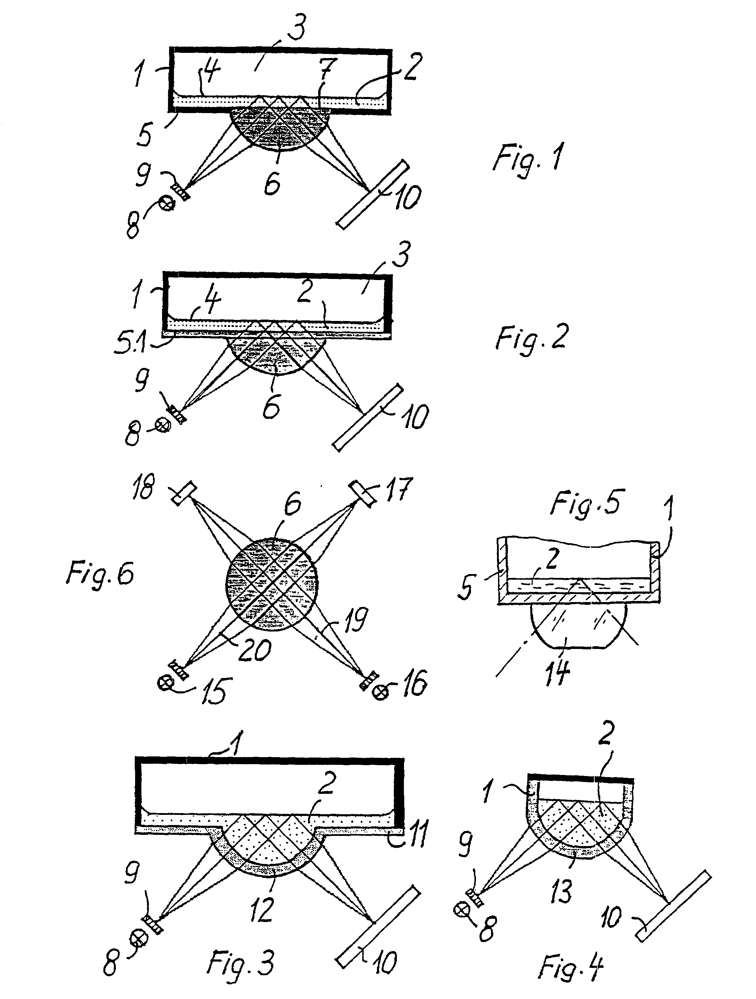

Der in Fig. 1 schematisch dargestellte optische Neigungsmesser umfaßt ein Gefäß oder Gehäuse 1, welches teilweise mit einer Flüssigkeit 2 gefüllt ist. Über der Flüssigkeit 2 befindet sich vorteilhafterweise ein Gasvolumen 3 oder eine andere Flüssigkeit mit einen von der Flüssigkeit 2 unterschiedlichen Brechungsindex, so daß an der Trennfläche zwischen Gas und Flüssigkeit 2, also am Flüssigkeitsspiegel 4, Totalreflexion des durch die Flüssigkeit 2 hindurchlaufenden Lichtes erfolgen kann. Im Boden 5 des Gehäuses 1 ist ein abbildendes optisches Element 6 eingestetzt, welches aus einem durchsichtigen Werkstoff, beispielsweise aus einem optischen Kunststoff oder Glas besteht. Dieses optische Element 6 hat die Form einer dicken plankonvexen Linse, deren ebene Fläche 7 der Flüssigkeit 2 zugewandt ist und, wie die Fig. zeigt, direkt an die Flüssigkeit 2 grenzt. Dieses optische Element 6 kann als ein Kugelsegment ausgebildet sein.

Wie aus Fig. 1 weiterhin ersichtlich, befindet sich unterhalb des Bodens 5 und des Elementes 6 eine Lichtquelle 8, welche eine Strichmarke oder eine Struktur 9 beleuchtet oder mit welcher ein Lichtpunkt oder Lichtfleck erzeugt wird. Die Struktur 9 oder der Lichtpunkt oder -fleck werden durch das Element 6 durch die Flüssigkeit hindurch auf eine Sensoranordnung 10 abgebildet, wobei das optische Element 6 gleichzeitig als Kollimator, Ein- und Auskoppelelement und abbildendes Objektiv fungiert. Der Oberflächenbereich in Richtung der Struktur 9 bildet dem Kollimator und der der Sensoranordnung 10 zugewandte Oberflächenbereich des Elementes 6 bildet das Objektiv. Lichtquelle 8 und Struktur 9 sowie die Sensoranordnung 10 sind fest mit dem Gehäuse 1 verbunden, so daß bei einer Neigung des Neigungsmessers eine Verschiebung des Bildes der Struktur 9 auf der Sensoranordnung 10 erfolgt, welche ein Maß für den Betrag der Neigung ist. Die Sensoranordnung 10 besteht aus Sensorelementen, die linienförmig oder flächenhaft in Form einer Matrix angeordnet sind. Die Sensoranordnungen können auch als positionsempfindliche Anordnungen ausgebildet sein, z. B. als an sich bekannte Quadrantenfotoempfänger oder Differenzfotoempfänger.

Bei dem Neigungsmesser gemäß der Fig. 2 ist das optische Element 6 auf der der Lichtquelle zugewandten Seite des Bodens 5.1 des Gehäuses 1 mit seiner ebenen Fläche aufgekittet oder aufgeklebt, wobei mindetens der Kitt- oder Klebebereich des Bodens 5.1 transparent sein muß. Das optische Element 6 ist hier, wie auch bei der Anordnung nach Fig.1 vorzugsweise als ein Kugelsegment ausgebildet. Es sind aber auch andere Ausgestaltungen des Elementes 6 denkbar, die geeignet sind, zur Aufgabenlösung beizutragen.

Gemäß einer weiteren Ausgestaltung der Erfindung (in der Zeichnung nicht dargestellt) sind das optische Element 6 und der Bodens des Gehäuses ein einziges Bauteil aus optischem Kunststoff oder Glas, wobei die Form des Elementes spangebend, z. B. durch Schleifen, oder auch spanlos, z. B. durch Pressen, hergestellt ist.

Bei der Ausgestaltung des optischen Neigungsmessers nach Fig. 3 bilden der Boden 11 des Gehäuses 1 und das als eine kalottenförmige Ausbuchtung 12 des Bodens 11 herausgebildete optische Element ebenfalls ein einziges Bauteil, wobei das Volumen der Ausbuchtung 12 Bestandteil des Volumens des Gehäuses 1 ist und mit Flüssigkeit 2 gefüllt ist. Vorteilhaft kann diese Ausbuchtung 12 spanlos durch Pressen oder Tiefziehen hergestellt werden, es sollte nur darauf Wert gelegt werden, daß von Licht durchstrahlten Flächen optische Qualität erhalten.

Fig. 4 zeigt eine Ausführung eines erfindungsgemäßen optischen Neigungsmessers, bei welcher der Boden 13 des Gehäuses 1 oder Gefäßes kalottenförmig ausgebildet ist und zusammen mit dem übrigen Teil des Gehäuses 1 ein Volumen einschließt, welches teilweise mit der Flüssigkeit angefüllt ist.

In Fig. 5 ist ein Neigungsmesser mit einem als Kugelschicht ausgebildeten optischen Element 14 dargestellt.

Fig. 6 zeigt einen Neigungsmesser, mit dem in zwei unter einem Winkel (hier 90°) zueinander verlaufenden Achsen die Neigungen gemessen werden können. Bei dieser Ausführung sind zwei Lichtquellen 15 und 16 sowie zwei zugeordnete Sensoranordnungen 17 und 18, für jede der Meßrichtungen eine, vorgesehen. Bei einer solchen Anordnung zeigt sich der Vorteil der Erfindung besonders deutlich. Über das als dicke Linse ausgebildete optische Element 6 werden ohne optischen Mehraufwand mehrere Strahlengänge 19 und 20 geführt.

Die Erfindung gestattet es, einen sehr robusten und zuverlässigen Neigungsmesser mit wenigenm Bauteilen zu bauen, wobei insbesondere das optische Element 6; 14 in den verschiedenen Ausführungen mehrere Funktionen übernimmt. Einerseits übernimmt es die Funktion des Kollimators und andererseits bildet es ein Objektiv. Über dieses Bauteil werden mehrere Strahlengänge in verschiedenen Richtungen geführt.

## Patentansprüche

1. Optischer Neigungsmesser, umfassend
-- ein Gehäuse oder Gefäß mit einer einen Flüssigkeitshorizont bildenden, transparenten Flüssigkeit, welche geeignet ist, die Richtung mindestens eines optischen Strahlenbündels neigungsabhängig zu ändern,
-- mindestens eine Lichtquelle zur Beleuchtung mindestens einer Struktur oder zur Erzeugung mindestens eines Lichtpunktes oder -flecks,
-- und optische Mittel zur Abbildung der mindestens einen Struktur oder des mindestens einen Lichtpunktes oder -flecks durch die Flüssigkeit hindurch und durch Totalreflexion an der Oberfläche der Flüssigkeit auf fotoelektrische Sensorelemente mindestens einer linien- oder flächenhaften Sensoranordnung, wobei die optischen Mittel zur Abbildung der Struktur oder des Lichtpunktes oder -flecks auf der Unterseite des Bodens des Gehäuses oder Gefäßes angeordnet sind oder Bestandteil dieses Bodens sind,
**dadurch gekennzeichnet,**
**daß** diese optischen Mittel aus einem einzigen, das Licht ein- und auskoppelnden und die Struktur oder den Lichtpunkt oder -fleck abbildenden, optischen Element (6; 12; 13; 14) bestehen.

2. Optischer Neigungsmesser nach Anspruch 1, **dadurch gekennzeichnet,**
**daß** das abbildende optische Element (6) die Form einer dicken plankonvexen Linse besitzt, deren ebene Fläche (7) der Flüssigkeit (2) zugewandt ist.

3. Optischer Neigungsmesser nach Anspruch 2, **dadurch gekennzeichnet,**
**daß** das optische Element (6) ein Kugelsegment ist.

4. Optischer Neigungsmesser nach mindestens einem der vorgehenden Ansprüche,
**dadurch gekennzeichnet,**
**daß** das optische Element (14) eine Kugelschicht ist.

5. Optischer Neigungsmesser nach einem der Ansprüche 1 bis 4, **dadurch gekennzeichnet,**
**daß** das optische Element (6) auf der Unterseite des Bodens (5.1) aufgekittet oder aufgeklebt ist.

6. Optischer Neigungsmesser nach mindestens einem der vorgehenden Ansprüche,
**dadurch gekennzeichnet,**
**daß** das optische Element (6; 14) aus einem optischen Kunststoff oder aus Glas besteht.

7. Optischer Neigungsmesser nach mindestens einem der vorgehenden Ansprüche,
**dadurch gekennzeichnet,**
**daß** das Gehäuse und das abbildende optische Element ein einziges Bauteil aus optischem Kunststoff oder Glas bilden.

8. Optischer Neigungsmesser nach einem der Ansprüche 1 bis 3, 5, und 7 **dadurch gekennzeichnet,**
**daß** die ebene Fläche (7) des optischen Elementes (6) an die Flüssigkeit (2) grenzt

9. Optischer Neigungsmesser nach mindestens einem der vorgehenden Ansprüche,
**dadurch gekennzeichnet,**
**daß** das Gehäuse (1) oder Gefäß einen kalottenförmigen Boden (13) besitzt.

10. Optischer Neigungsmesser nach mindestens einem der vorgehenden Ansprüche,
**dadurch gekennzeichnet,**
**daß** das Gehäuse (1) und das abbildende optische Element ein einziges Bauteil bilden und das optische Element durch eine kalottenförmige Ausbuchtung (12) des Bodens (11) des Gehäuses (1) gebildet wird, deren Volumen Bestandteil des Volumens des Gehäuses (1) ist und mit der Flüssigkeit (2) gefüllt ist.

11. Optischer Neigungsmesser nach mindestens einem der vorgehenden Ansprüche,
**dadurch gekennzeichnet,**
**daß** zur Neigungsmessung in mehreren Koordinaten zwei oder mehr gegeneinander winkelversetzt angeordnete Lichtquellen (15; 16) und Sensoranordnungen (17; 18) vorgesehen sind.

## Claims

1. Optical clinometer including
a housing or vessel with a transparent liquid forming a liquid horizon which is suitable for altering the direction of at least one optical radiation beam in an inclination-dependent manner,
at least one light source for illuminating at least one structure or for producing at least one spot or patch of light,
and optical means for imaging the at least one structure or the at least one point or patch of light through the liquid and by total reflection at the surface of the liquid on photoelectric sensor elements of at least one linear or area sensor arrangement, the optical means for imaging the structure or the point or patch of light being arranged on the underside of the base of the housing or vessel or being a component of this base, **characterised in that** these optical means comprise a single optical element (6; 12; 13; 14) which couple the light in and out and image the structure or the point or patch of light.

2. Optical clinometer as claimed in Claim 1, **characterised in that** the imaging optical element (6) has the shape of a thick plano-convex lens, the flat surface (7) of which is directed towards the liquid (2).

3. Optical clinometer as claimed in Claim 2, **characterised in that** the optical element (6) is a spherical segment.

4. Optical clinometer as claimed in at least one of the preceding claims, **characterised in that** the optical element (14) is a spherical layer.

5. Optical clinometer as claimed in one of Claims 1 to 4, **characterised in that** the optical element (6) is cemented or glued to the underside of the base (5.1).

6. Optical clinometer as claimed in at least one of the preceding claims, **characterised in that** the optical element (6; 14) consists of optical plastic or of glass.

7. Optical clinometer as claimed in at least one of the preceding claims, **characterised in that** the housing and the imaging optical element comprise a single component of optical plastic or glass.

8. Optical clinometer as claimed in one of Claims 1 to 3, 5 and 7, **characterised in that** the flat surface (7) of the optical element (6) adjoins the liquid (2).

9. Optical clinometer as claimed in at least one of the preceding claims, **characterised in that** the housing (1) or vessel has a hemispherical base (13).

10. Optical clinometer as claimed in at least one of the preceding claims, **characterised in that** the housing (1) and the imaging optical element comprise a single component and the optical element is constituted by a hemispherical convexity (12) in the base (11) of the housing (1), the volume of which is a component of the volume of the housing (1) and is filled with a liquid (2).

11. Optical clinometer as claimed in at least one of the preceding claims, **characterised in that** two or more mutually angularly offset light sources (15; 16) and sensor arrangements (17; 18) are provided for measuring inclination in a plurality of coordinates.

## Revendications

1. Clinomètre optique comportant
- un boîtier ou récipient avec un liquide transparent qui forme un horizon liquide et qui est en mesure de modifier la direction d'au moins un faisceau de rayons optiques en fonction de l'inclinaison,
- au moins une source de lumière pour éclairer au moins une structure ou pour produire au moins un point lumineux ou une tache lumineuse,
- ainsi que des moyens optiques pour reproduire la ou les structures ou le ou les points lumineux ou taches lumineuses à travers le liquide et par réflexion totale à la surface du liquide sur des éléments à capteurs photoélectriques d'au moins un dispositif à capteurs linéaires ou surfacique, les moyens optiques de reproduction de la structure ou du point lumineux ou de la tache lumineuse étant disposés sur la face inférieure du fond du boîtier ou du récipient, ou faisant partie intégrante de ce fond,
**caractérisé en ce que** ces moyens optiques sont constitués d'un seul élément optique (6 ; 12 ; 13 ; 14) qui laisse entrer et sortir la lumière et qui reproduit la structure ou le point lumineux ou la tache lumineuse.

2. Clinomètre optique selon la revendication 1, **caractérisé en ce que** l'élément optique (6) de reproduction a la forme d'une lentille plane convexe épaisse, dont la surface plane (7) est tournée vers le liquide (2).

3. Clinomètre optique selon la revendication 2, **caractérisé en ce que** l'élément optique (6) est un segment de sphère.

4. Clinomètre optique selon l'une au moins des revendications précédentes, **caractérisé en ce que** l'élément optique (14) est une couche sphérique.

5. Clinomètre optique selon l'une des revendications 1 à 4, **caractérisé en ce que** l'élément optique (6) est mastiqué ou collé sur la face inférieure du fond (5.1).

6. Clinomètre optique selon l'une au moins des revendications précédentes, **caractérisé en ce que** l'élément optique (6 ; 14) est constitué d'une matière plastique optique ou de verre.

7. Clinomètre optique selon l'une au moins des revendications précédentes, **caractérisé en ce que** le boîtier et l'élément optique de reproduction forment un composant unique en matière plastique optique ou en verre.

8. Clinomètre optique selon l'une des revendications 1 à 3, 5 et 7, **caractérisé en ce que** la surface plane (7) de l'élément optique (6) est limitrophe du liquide (2).

9. Clinomètre optique selon l'une au moins des revendications précédentes, **caractérisé en ce que** le boîtier (1) ou le récipient possède un fond (13) en forme de calotte.

10. Clinomètre optique selon l'une au moins des revendications précédentes, **caractérisé en ce que** le boîtier (1) et l'élément optique de reproduction forment un composant unique et l'élément optique est formé par un renflement (12) en forme de calotte du fond (11) du boîtier (1) dont le volume fait partie intégrante du volume du boîtier (1) et est rempli avec le liquide (2).

11. Clinomètre optique selon l'une au moins des revendications précédentes, **caractérisé en ce que** pour la mesure de l'inclinaison dans plusieurs coordonnées, sont prévues deux sources de lumière (15 ; 16 ) ou plus, disposées décalées angulairement l'une par rapport à l'autre, ainsi que des dispositifs à capteurs (17 ; 18).
